# EUROPÄISCHE PATENTSCHRIFT

(11) **EP 2 485 991 B1**
(45) Veröffentlichungstag und Bekanntmachung des Hinweises auf die Patenterteilung: **13.05.2015**
(21) Anmeldenummer: 10754347.2
(22) Anmeldetag: 20.09.2010
(51) Int. Cl.: C04B 28/02, C04B 40/00

(54) **VERBESSERUNG DER DAUERHAFTIGKEIT VON FESTBETON**
IMPROVING THE DURABILITY OF HARDENED CONCRETE
AMÉLIORATION DE LA SOLIDITÉ DU BÉTON DURCI

(30) Priorität: 07.10.2009 DE 102009045450
(43) Veröffentlichungstag der Anmeldung: 15.08.2012
(73) Patentinhaber: Wacker Chemie AG, 81737 München (DE)
(72) Erfinder: SORGER, Klas, 81371 München (DE); BEZLER, Jürgen, 84489 Burghausen (DE)
(74) Vertreter: Ege, Markus
(86) Internationale Anmeldenummer: PCT/EP2010/063786
(87) Internationale Veröffentlichungsnummer: WO 2011/042294

(56) Entgegenhaltungen:
- EP-A1- 1 982 964
- DE-A1- 2 822 357
- DE-A1-102005 051 588
- DE-B- 1 182 128
- GB-A- 1 489 947

## Beschreibung

Die Erfindung betrifft die Verwendung von Additiven für Betonzusammensetzungen zur Herstellung von Festbeton mit verbesserter Dauerhaftigkeit, insbesondere im Bereich des Konstruktionsbaus, wie beispielsweise zur Herstellung von Betonbauwerken oder Betonfertigteilen.

Betonzusammensetzungen enthalten hydraulisch abbindende Bindemittel, wie Zement, Füllstoffe, wie Sand oder Kies, Wasser und gegebenenfalls ein oder mehrere Zusatzmittel. Abbinden der Betonzusammensetzungen führt zu Festbeton. Festbeton unterliegt im Allgemeinen Alterungsprozessen bzw. Witterungseinflüssen, wie beispielsweise Carbonatisierung, Frosttau- oder Salzangriff. Beim Frosttauangriff wird das poröse Betongefüge des Festbetons im Zuge von Frost-Tau-Zyklen geschädigt. Beim Salzangriff dringen Salzionen, wie Chloride oder Sulfate, über das Kapillarsystem in das poröse Betongefüge ein, was zu einer Schädigung des Festbetons und zur Korrosion etwaiger Stahlbewehrung führt. Dieses Problem tritt verstärkt im Winter in Folge des Einsatzes von Tausalz auf und ist dann auch unter dem Begriff Frosttausalzangriff bekannt. Sulfationen aus Wässern, Böden oder Gasen können in den Festbeton eindringen und mit Bestandteilen des Zementsteins reagieren und dabei zu einer Korrosion durch Sulfattreiben oder Entfestigen führen. Carbonatisierung wird durch das in der Luft enthaltene Kohlendioxid ausgelöst. Die aus Kohlendioxid gebildete Kohlensäure kann durch das Kapillarsystem des Festbetons diffundieren und dabei mit carbonatisierungsfähigen Bestandteilen des Zementsteins, wie Calciumhydroxid, reagieren, wobei der pH-Wert des Festbetons abgesenkt und der alkalische Korrosionsschutz der Stahlbewehrung aufgehoben wird.

Durch Maßnahmen, die einer Schädigung von Festbeton durch derartige Alterungsprozesse bzw. Witterungseinflüsse entgegenwirken, kann die Dauerhaftigkeit von Festbeton verbessert werden.

In der US 5356716 wird vorgeschlagen, die Oberfläche von Festbeton mit wässrigen Zusammensetzungen aus Polyurethandispersionen, Alkalimetall-Methylsiliconaten und Alkalimetallsilicaten zu beschichten.

Aus der JP-A 6199558 sind für Festbeton Beschichtungen mit Schichtdicken von einem Millimeter auf Basis von Polymerdispersionen, Amino- oder Epoxy-Gruppen tragenden Silankopplungsverbindungen, Zement und Sand bekannt. Aus der DE-A 10010860 sind hochpolymerhaltige Dichtungsschlämme bekannt. Das Aufbringen derartiger Oberflächenbeschichtungen erfordert einen zusätzlichen Arbeitsschritt und ist somit aufwändig. Weniger aufwändig ist es dagegen, Betonzusammensetzungen so mit Additiven zu modifizieren, dass die Eigenschaften des damit erhältlichen Festbetons verbessert werden. So werden in der EP-A 1286930 und der EP-A 717016 Polymere und Fettsäureester als Zusatzmittel für zementäre Systeme beschrieben, um zementäre Produkte mit höherer Druck- oder Schlagfestigkeit oder wasserabweisenden Eigenschaften zu erhalten. In der US 5922124 werden feinteilige Polymere und Metallseifen, z.B. Calciumstearat, als Zusatzmittel für zementäre Systeme eingesetzt, um UV-Licht beständigere und weniger zu Ausblühungen neigende und damit zusammenhängend Hitze- sowie Frost-Taubeständigere Produkte zu erhalten. Derartig modifizierte zementäre Produkte sind allerdings hinsichtlich ihrer Dauerhaftigkeit auch deswegen nicht befriedigend, da die unter den alkalischen Bedingungen aus den Fettsäurederivaten freigesetzten Fettsäuresalze auf Grund ihrer gewissen Wasserlöslichkeit im Laufe der Zeit aus der Betonmatrix ausgetragen werden.

Die EP-A 1817371 beschreibt hydrophobierende Additive auf Basis von Polymeren und mindestens 30 Gew.-% an hydrophoben Verbindungen, wie Silikonen und/oder Fettsäure-Derivaten, sowie die Anwendung derartiger Additive im Baukleber-, Textil, Coating- oder Lack-Bereich. Hohe Einsatzmengen an Organosiliciumverbindungen können die Zementhydratation verzögern und sich nachteilig auf die Betondruckfestigkeit auswirken. Die hydrophobierenden Additive der EP-A 1817371 enthalten erhebliche Mengen an Polyvinylalkohol sowie Antiblockmittel. Derartig hohe Mengen an Polyvinylalkohol erhöhen den Wasseranspruch bzw. den Wasser-Zementwert (w/z-Wert) von Zusammensetzungen enthaltend hydraulisch abbindende Bindemittel. Ein erhöhter Wasser-Zementwert führt zu einem poröseren Gefüge des Festbetons mit verminderter Dauerhaftigkeit. Hohe Mengen an Polyvinylalkohol ergeben klebrige Betonzusammensetzungen und beeinträchtigen dessen Verarbeitbarkeit. Des Weiteren kann Polyvinylalkohol als wasserlösliche Komponente aus dem Festbeton herausgewaschen werden, was sich nachteilig auf die Dauerhaftigkeit auswirkt und bei Einsatz größerer Mengen an Polyvinylalkohol zum Tragen kommt. Antiblockmittel erhöhen ebenfalls den Wasseranspruch der Betonrezeptur und sind deshalb im Beton unerwünscht. Die EP-A 1394198 beschreibt hydrophob modifizierte Polymerzusammensetzungen, die als hydrophobierende Komponenten Organosiliciumverbindungen und zudem Fettsäureverbindungen enthalten, sowie deren Anwendung im Baukleber- oder auch Textil-Bereich. Fettsäureverbindungen können, wie bereits beschrieben, aus der Betonmatrix ausgetragen werden, was sich nachteilig auf die Dauerhaftigkeit des Festbetons auswirken kann. Des Weiteren enthalten auch die Polymerzusammensetzungen der EP 1394198 einen hohen Anteil an Schutzkolloiden, wie Polyvinylalkohol, und Antiblockmittel. Aus der US 4151150 ist der Einsatz von StyrolButadien-Copolymeren und Silanen, die Schwefel-, Stickstoff- oder Sauerstoffatome enthaltende funktionelle Gruppen tragen, zur Verbesserung der mechanischen Festigkeit von zementären Mörteln und zur Steigerung der Haftung auf silikatischen Untergründen bekannt. Produkte mit einer höheren mechanischen Festigkeit sind aber bekanntermaßen weniger elastisch und neigen daher zur Rissbildung. Risse beschleunigen aber die Alterungs- bzw. Witterungsprozesse von Festbeton. Auch die US 3190762 empfiehlt eine Reihe von Silanen als Additive für zementäre Anwendungen. Aus der DE-A 19747794 ist der Zusatz von Silanen mit speziellen Strukturmerkmalen zu zementären Systemen bekannt.

Die EP 1 982 964 offenbart Zusammensetzungen umfassend wenigstens ein Polymer (i) sowie ein Silan (ii), wobei die Zugabe dieser Zusammensetzungen zu Beton, insbesondere Stahlbeton zur Inhibierung der Korrosion dient.

Vor diesem Hintergrund bestand die Aufgabe, Betonzusammensetzungen so zu modifizieren, dass der damit hergestellte Festbeton mit einer Schichtdicke von ≥ 3 cm eine höhere Dauerhaftigkeit und nach Möglichkeit nicht die vorgenannten Nachteile aufweist.

Gegenstand der Erfindung ist die Verwendung von Betonzusammensetzungen enthaltend Zement, Füllstoffe, Wasser und gegebenenfalls weitere Additive oder Zusatzmittel zur Herstellung von Festbeton mit einer Schichtdicke von ≥ 3 cm, dadurch gekennzeichnet, dass die Betonzusammensetzungen zusätzlich 0,1 bis 15 Gew.-%, bezogen auf das Trockengewicht der Polymerisate, an einem oder mehreren Silanen und 0,2 bis 40 Gew.-%, bezogen auf den Zementgehalt der Betonzusammensetzung, an einem oder mehreren Polymerisaten auf Basis ethylenisch ungesättigter Monomere enthalten,
wobei die Polymerisate in Form von Schutzkolloid stabilisierten wässrigen Dispersionen vorliegen und
die Silane ausgewählt werden aus der Gruppe bestehend aus Tetramethoxysilan, Tetraethoxysilan, Methyltripropoxysilan, Methyltri(ethoxy-ethoxy)silan, Phenyltriethoxysilan, Isobutyltriethoxysilan, Isooctyltriethoxysilan, Isooctyltrimethoxysilan, n-Octyltriethoxysilan, n-Octyltrimethoxysilan, Hexadecyltriethoxysilan, Hexadecyltrimethoxysilan, Dipropyldiethoxysilan, Methylphenyldiethoxysilan und Diphenyldimethoxysilan.

Bevorzugte Silane sind Isooctyltriethoxysilan, n-Octyltriethoxysilan und Hexa-decyltriethoxysilan.

Die Herstellung der genannten Silane kann nach Verfahren erfolgen, wie sie beispielsweise in Noll, Chemie und Technologie der Silicone, 2. Auflage 1968, Weinheim, und in Houben-Weyl, Methoden der organischen Chemie, Band E20, Georg Thieme Verlag, Stuttgart (1987) beschrieben sind.

Geeignete Polymerisate von ethylenisch ungesättigten Monomeren sind beispielsweise solche auf Basis von einem oder mehreren Monomeren ausgewählt aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoVa10R (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,1 bis 5 Gew.-%, bezogen auf das Gesamtgewicht des Monomergemisches, Hilfsmonomere copolymerisiert werden. Bevorzugt werden 0,5 bis 2,5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder - methacrylat.

Monomere mit mehr als einer ethylenisch ungesättigten Gruppe werden vorzugsweise zu ≤ 25 Gew-%, besonders bevorzugt zu ≤ 5 Gew.-%, ganz besonders bevorzugt zu ≤ 1 Gew.-% eingesetzt, jeweils bezogen auf die Gesamtmasse der Monomere zur Herstellung der Polymerisate. Am meisten bevorzugt werden keine Monomere mit mehr als einer ethylenisch ungesättigten Gruppe zur Herstellung der Polymerisate eingesetzt. Monomere mit mehr als einer ethylenisch ungesättigten Gruppe führen zu vernetzten Polymerisaten, die sich im Festbeton häufig nachteilig auf die Dauerhaftigkeit auswirken können.

Bevorzugt werden Mischpolymerisate von Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest, wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten können; Mischpolymerisate mit Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylester-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder von Vinylestern einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten können; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, das eine Glasübergangstemperatur Tg von -40°C bis +40°C, vorzugsweise -25°C bis +25°C, besonders bevorzugt -20°C bis 10°C, am meisten bevorzugt -15°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt in wässrigem Medium und bevorzugt nach dem Emulsions- oder Suspensionspolymerisationsverfahren - wie beispielsweise in DE-A 102008043988 beschrieben. Die Polymerisate fallen dabei in Form von wässrigen Dispersionen an. Bei der Polymerisation können die gängigen Schutzkolloide und/oder Emulgatoren eingesetzt werden, wie in der DE-A 102008043988 beschrieben. Bevorzugt sind Polymerisate in Form von Schutzkolloid-stabilisierten wässrigen Dispersionen. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, besonders bevorzugt 2 bis 10 Gew.-% und am meisten bevorzugt 2 bis 7 Gew.-%, bezogen auf das Gesamtgewicht der Monomere, bei der Polymerisation zugesetzt.

Die Polymerisate haben vorzugsweise mittlere Teilchengrößen von ≥ 100 nm, besonders bevorzugt von ≥ 500 nm und am meisten bevorzugt von > 1 µm (bestimmt mittels Coulter). Polymerisate mit großen Teilchengrößen erlauben den Einsatz besonders geringer Mengen an Schutzkolloiden und/oder Emulgatoren.

Die Polymerisate in Form von wässrigen Dispersionen können, wie in der DE-A 102008043988 beschrieben, in entsprechende in Wasser redispergierbare Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt. Vorzugsweise werden die Polymerisate aber in Form von Dispersionen, d.h. vorzugsweise nicht als redispergierbare Polymerpulver oder wässrige Redispersionen von Polymerpulvern eingesetzt. Polymerdispersionen enthalten im Gegensatz zu Polymerpulvern im Allgemeinen auch keine Antiblockmittel. Antiblockmittel sind beispielsweise Ca- bzw. Mg-Carbonat, Talk, Gips, Kaoline oder Silicate.

Zement ist, insbesondere Portlandzement, Aluminatzement, Trasszement, Hüttenzement, Magnesiazement, Phosphatzement oder Hochofenzement; sowie Mischzemente (Kompositzemente). Bevorzugt sind Portlandzement CEM I, Portlandhüttenzement CEM II/A-S, CEM II/B-S, Portlandkalksteinzement CEM II/A-LL, Portlandflugaschezement CEM II/A-V, Portlandflugaschehüttenzement CEM II/B-SV oder Hochofenzement CEM III/A, CEM III/B. Gegebenenfalls können die Zemente über die üblicherweise enthaltenen Anteile an Sulfatträger hinaus in Abhängigkeit von der Reaktionsfähigkeit der Zemente Anteile an Erstarrungsreglern, wie beispielsweise Gips oder Anhydrit, enthalten.

Typische Rezepturen der Betonzusammensetzungen enthalten 9 bis 60 Gew.-%, insbesondere 12 bis 40 Gew.-% Zement. Ein weiterer Bestandteil sind 50 bis 90 Gew.-%, bevorzugt 65 bis 90 Gew.-% Füllstoffe wie Sand, Kies oder Splitt. Soweit nicht anders angegeben beziehen sich die Angaben in Gew.-% jeweils auf 100 Gew.-% Trockenmasse der Rezeptur.

Polymerisate werden zu 0,2 bis 40 Gew.-%, bevorzugt zu 0,5 bis 20 Gew.-%, besonders bevorzugt von 1 bis 10 Gew.-% und am meisten bevorzugt von 1 bis 5 Gew.-%, bezogen auf den Zementgehalt der Betonzusammensetzung, eingesetzt, jeweils vorzugsweise in Form von wässrigen Dispersionen mit einem Feststoffgehalt von 10 bis 75 Gew.-%, besonders bevorzugt von 40 bis 60 Gew.-%.
Die Silane werden in einer Menge von 0,1 bis 15 Gew.-%, besonders bevorzugt 0,5 bis 9 Gew.-% und am meisten bevorzugt von 0,5 bis 9 Gew.-%, jeweils bezogen auf das Trockengewicht der Polymerisate, eingesetzt.
Zur Herstellung der Betonzusammensetzungen werden üblicherweise zusätzlich 15 bis 80 Gew.-%, besonders bevorzugt 20 bis 65 Gew.-% und am meisten bevorzugt 30 bis 60 Gew.-% Wasser, bezogen auf die Gesamtmasse des eingesetzten Zements, eingesetzt.

Die anwendungstechnischen Eigenschaften der Betonzusammensetzungen können durch weitere Zusatzmittel verbessert werden. In bevorzugten Ausführungsformen enthaltene Zusatzmittel sind beispielsweise 0,01 bis 2 Gew.-%, bevorzugt 0,05 bis 1,5 Gew.-% und besonders bevorzugt 0,1 bis 1,0 Gew.-%, bezogen auf Zement, Entschäumer, Betonverflüssiger (dem Fachmann auch bekannt als Fließmittel), oder Pigmente, Schaumstabilisatoren, Hydrophobierungsmittel, Weichmacher, Flugasche, disperse Kieselsäure, Luftporenmittel zur Steuerung der Betonrohdichte oder Pumpenhilfsmittel zur Verbesserung der Pumpbarkeit. Als Additive können Abbindebeschleuniger eingesetzt werden, vorzugsweise 3 bis 10 Gew.-%, bezogen auf den Zementgehalt der Betonzusammensetzung. Beispiele für Abbindebeschleuniger sind Aluminiumverbindungen, Silikate, Alkalihydroxide oder Carbonate. Bevorzugte Abbindebeschleuniger sind Aluminiumsalze, Aluminate, Alkalisilikate, wie beispielsweise Wasserglas, Alkalicarbonate oder Kaliumhydroxid. Abbindebeschleuniger werden insbesondere dann eingesetzt, wenn die Betonzusammensetzungen nach den gängigen Nass- oder Trockenspritzverfahren verarbeitet werden sollen. Des Weiteren können den Betonzusammensetzungen gegebenenfalls zusätzliche Additive zugesetzt werden, die den abbindebeschleunigenden Effekt der Abbindebeschleuniger auf die Nassbetonmischungen modulieren, wie beispielsweise Phosphorsäure, Phosphonsäuren, Polyphosphat, Polyhydroxycarbonsäure oder organische Additive, insbesondere Polyacrylsäure, Hexamethylentetraamin, Alkanolamine wie beispielsweise Diethanolamin (DEA) oder Triethanolamin.

Zusätzlich können zur Herstellung der Betonzusammensetzung Fasern eingesetzt werden, wie beispielsweise natürliche, modifizierte natürliche oder künstliche Fasern, insbesondere Stahlfasern, Glasfasern, Carbonfasern oder Fasern aus Polypropylen, Polyethylen, Polyvinylalkohol, Polyacrylnitril, Polyester, Polyamid oder auch Cellulosefasern oder modifizierte Cellulosefasern. Vorzugsweise werden Fasern zu 0,01 bis 15 Gew.-%, besonders bevorzugt zu 0,1 bis 5 Gew.-% eingesetzt, bezogen auf 100 Gew.-% Trockenmasse der Betonzusammensetzung.

Die Herstellung der Betonzusammensetzungen aus den einzelnen Bestandteilen der Rezeptur ist an keine besondere Vorgehensweise oder Mischvorrichtung gebunden. Die einzelnen Bestandteile können beim Mischen in trockener Form oder gegebenenfalls in wässriger Form eingesetzt werden. Das Mischen kann beispielsweise in einem Betonmischer oder einem Fertigbetonmischwerk erfolgen. Vorzugsweise werden zuerst die festen Komponenten gemischt und anschließend die flüssigen Komponenten bzw. wässrigen Komponenten zugegeben.

Vorzugsweise werden die Polymerisate in Form von wässrigen Dispersionen, insbesondere in Form von Schutzkolloid stabilisierten Dispersionen eingesetzt. In einer besonders bevorzugten Ausführungsform werden die Silane ganz oder teilweise in Substanz zu den wässrigen Polymerdispersionen zugegeben. Diese Vorgehensweise hat den Vorteil, dass ein Voremulgieren von Silanen in Wasser unterbleiben kann, da die Silane durch die Schutzkolloide und/oder Emulgatoren der wässrigen Polymerdispersion stabilisiert werden und folglich keine zusätzlichen Mengen an Emulgatoren und/oder Schutzkolloiden zur Stabilisierung der Silane eingesetzt werden müssen. Derartige Silan-haltigen Polymerdispersionen sind überraschenderweise lagerstabil. Gegebenenfalls können die Silane auch schon vor oder während der Polymerisation bei der Herstellung der Polymerisate zugegeben werden. Die Silan-haltigen Polymerdispersionen haben vorzugsweise pH-Werte von 3 bis 10, besonders bevorzugt von 4 bis 9 und am meisten bevorzugt von 6 bis 8. Bei derartigen pH-Werten sind die Silan-haltigen Polymerdispersionen besonders lagerstabil. Die gegebenenfalls eingesetzten Entschäumer werden vorzugsweise den Polymerdispersionen direkt zugemischt.

Die Betonzusammensetzungen können nach den gängigen Verfahren als Baustellenbeton, Transportbeton oder Ortbeton appliziert werden. Bei Einsatz von Spritzbetonverfahren, beispielsweise Nassspritzbeton- oder Trockenspritzbetonverfahren, können die bekannten Vorrichtungen wie beispielsweise Spritzroboter oder Spritzmaschinen eingesetzt werden. Abbinden von Betonzusammensetzungen ergibt Festbeton.

Die Schichtdicke des Festbetons beträgt vorzugsweise ≥ 5 cm, besonders bevorzugt ≥ 10 und am meisten bevorzugt ≥ 15 cm.

Die erfindungsgemäßen Betonzusammensetzungen und der damit erhältliche Festbeton besitzen eine Reihe unerwarteter vorteilhafter Eigenschaften. So ist der erfindungsgemäß hergestellte Festbeton im Vergleich zu herkömmlichem Festbeton gegenüber Alterungsprozessen und Witterungseinflüssen beständiger und verfügt folglich über eine höhere Dauerhaftigkeit, so dass die Nutzungsdauer des Festbetons verlängert werden kann. Des Weiteren wird die Sanierungsbedürftigkeit des Festbetons gesenkt, wodurch die Instandhaltungskosten verringert werden. Auf Grund der verbesserten Dauerhaftigkeit verliert der erfindungsgemäß hergestellte Festbeton auch nach einer langen Nutzungsdauer nicht so schnell an Festigkeit und Stabilität, so dass erfindungsgemäß hergestellter Festbeton auch mit einer geringeren Schichtdicke verbaut werden kann und dabei dennoch die technischen Anforderungen erfüllt wie herkömmlicher Festbeton mit größeren Schichtdicken. Aus denselben Gründen kann auch die Betondeckung, d.h. die Betonschicht über etwaigem Bewehrungsstahl, bei der erfindungsgemäßen Vorgehensweise reduziert werden. Insgesamt wird also die Wirtschaftlichkeit von Festbeton durch die erfindungsgemäße Vorgehensweise verbessert.

Überraschenderweise wird durch den Einsatz von Polymerisaten und Silanen schließlich Festbeton erhalten, der im Vergleich zu ausschließlich Polymer-modifiziertem, d.h. nicht Silan-modifiziertem Festbeton eine höhere Druckfestigkeit aufweist. Und im Vergleich zu unmodifiziertem Festbeton besitzt der erfindungsgemäße Festbeton ein niedrigeres E-Modul, weswegen er weniger zur Rissbildung neigt und damit zusammenhängend eine höhere Dauerhaftigkeit besitzt. Durch die erfindungsgemäße Merkmalskombination wird also auch Festbeton mit vorteilhaften mechanischen Eigenschaften erhalten. Bei alleinigem Einsatz von Silanen in Betonzusammensetzungen bzw. nach Oberflächenbehandlung von Festbeton mit Silanen wird dagegen keine signifikante Verbesserung der Dauerhaftigkeit erreicht, wie von J. Neisecke, Baumarkt, 1992, Seiten 672-677 bekannt ist. Durch Absenkung des E-Moduls ist es zudem möglich, Betonkonstruktionen mit reduzierter Bewehrung auszuführen, was auch Kosten senkend auswirkt.

Bei der erfindungsgemäßen Vorgehensweise wurde auch schon bei niedrigen Einsatzmengen an Silanen eine erhebliche Steigerung der Dauerhaftigkeit von Festbeton erzielt. Auf Grund der langen Anwendungsdauer von Festbeton ist es auch von entscheidendem Vorteil, dass die erfindungsgemäß eingesetzten Silane und Polymerisate im Festbeton in stabiler Weise eingebaut sind und auch bei Kontakt mit Wasser nicht ausgewaschen werden. Selbst ein geringfügiges Auswaschen ist in Anbetracht der langen Nutzungsdauer von Festbeton von erheblichem Nachteil. Die erfindungsgemäßen Betonzusammensetzungen ergeben selbst bei höheren als den üblicherweise eingesetzten w/z-Werten Festbeton, der die bautechnischen Anforderungen an die Dauerhaftigkeit gemäß DIN 1045-2 erfüllt. Dies ist überraschend, da bekanntermaßen bei einem höheren w/z-Wert die Porosität des Festbetons zunimmt und folglich die Dauerhaftigkeit im Allgemeinen abnimmt. Das Arbeiten bei höheren w/z-Wert verbessert jedoch die Verarbeitbarkeit der Betonzusammensetzungen und erlaubt es, weniger Betonverflüssiger bzw. Fließmittel einzusetzen, was sich wiederum Kosten senkend auswirkt.

Die erfindungsgemäßen Betonzusammensetzungen eignen sich für alle gängigen Beton-Anwendungen, insbesondere für die Herstellung von Beton-Böden, wie Industrieböden, Bodenplatten, beispielsweise weiße Wannen; oder Beton-Wänden, wie Kellerwände; für die Auskleidung von Bauwerken, wie Tiefgaragen, Parkdecks, Brücken, Brückenpfeiler, Brückenkappen, Tunneln, Tübbinge; Beton-Infrastrukturbauwerke, beispielsweise Minenanwendungen, wie Sturzschächte, Off-shore-Bauwerke, Kläranlagen oder Kanalbau, wie Räumerlaufbahnen oder Rohre, Kühltürme, Kraftwerke, Biogasanlagen, Flugplatzbefestigung oder Flugbetriebsflächen, Schwimmbäder, Betonstraßen, Straßendecken, Straßenbeläge, Whitetopping, Sanierung von Verkehrflächen, Rammpfähle; für die Herstellung von Betonfertigteilen, wie Betonrohre oder Elementwände; oder auch zur Hangsicherung oder Anwendung im ultra-hochfesten Beton (UHPC).

Die folgenden Beispiele dienen der detaillierten Erläuterung der Erfindung und sind in keiner Weise als Einschränkung zu verstehen.

### Additive zur Modifizierung von Betonzusammensetzungen:

Additiv D1:
   Mit Polyvinylalkohol stabilisierte, wässrige Dispersion eines Vinylacetat-Ethylen-Copolymerisats (Ethylengehalt: 21 Gew.-%, bezogen auf das Gesamtgewicht des Copolymerisats) mit einer Glasübergangstemperatur von -7°C und einem Feststoffgehalt von 50,0%.
Additiv D2:
   97 Gew.-Teile des Additivs D1, jedoch mit einem Festgehalt von 51,5%, wurden in einem Rührgefäß vorgelegt. Bei einer Umdrehungszahl von 930 min⁻¹ wurden 3 Gew.-Teile Isooctyltriethoxysilan unter Rühren mit einem Dissolver zugegeben und während 5 min homogen emulgiert. Die Mischung war stabil und zeigte keine Phasentrennung.
Additiv D3:
   97 Gew.-Teile des Additivs D1, jedoch mit einem Festgehalt von 51,5%, wurden in einem Rührgefäß vorgelegt. Bei einer Umdrehungszahl von 930 min⁻¹ wurden 3 Gew.-Teile n-Octyltriethoxysilan unter Rühren mit einem Dissolver zugegeben und innerhalb 5 min. homogen emulgiert. Die Mischung war stabil und zeigte keine Phasentrennung.
Additiv Z1:
   1,85 g Methyllaurat wurden mit 14 g einer 20 Gew.-%-igen wässrigen Polyvinylalkohol-Lösung (Höppler-Viskosität 4 mPas, Hydrolysegrad 88 Mol-%) mittels Dissolver bei einer Umdrehungszahl von 930 min⁻¹ homogen emulgiert.
Additiv Z2:
   1,85 g Isooctyltriethoxysilan wurden mit 14 g einer 20 Gew.-%-igen Polyvinylalkohol-Lösung (Höppler-Viskosität 4 mPas, Hydrolysegrad 88 Mol-%) mittels Dissolver bei einer Umdrehungszahl von 930 min-1 homogen emulgiert.

### Bestimmung des Eindringens von Frost-Tau-Salz in Betonkörper:

### Herstellung von Betonkörpern:

Zur Herstellung des jeweiligen Betonkörpers wurden die in Tabelle 1 angegebenen Komponenten in den dort angegebenen Mengen eingesetzt. Die jeweilige Betonzusammensetzung wurde in Anlehnung an DIN EN 12390-2 und DIN EN 12390-8 hergestellt und gelagert.
Es wurden zunächst die Trockenkomponenten, d.h. Zement und Kies, im Zwangsmischer vorgemischt und anschließend bei laufendem Mischer Wasser und gegebenenfalls ein Additiv zugegeben und die Mischung für weitere 3 min gemischt. Nach 5 min Ruhezeit wurde das Fließmittel bei laufendem Mischer zugegeben und die Mischung 1 min nachgemischt. Die so erhaltene Betonzusammensetzung wurde in eine Schalung (Maße: 15x15x15 cm³) eingebracht und auf dem Rütteltisch 1 min verdichtet. Entsprechend den Vorgaben der Expositionsklasse XD2 (DIN 1045-2) wurde ein w/z-Wert von 0,50 gewählt. Die Konsistenz der Betonzusammensetzungen wurde mit Fließmittel über das Ausbreitmaß "weich" eingestellt (Konsistenzklasse F 3).
Von der jeweiligen Betonzusammensetzung wurde nach DIN EN 12350-5 das Ausbreitmaß, nach DIN EN 12350-7 der Luftporengehalt (LP-Gehalt) und nach DIN EN 12350-6 die Rohdichte bestimmt (die Ergebnisse sind in Tabelle 1 aufgeführt).
Die mit den Betonzusammensetzungen gefüllten Schalungen wurden mit einer Folie abgedeckt und für 24 h bei 20 °C und 65% relativer Luftfeuchtigkeit gelagert und anschließend ausgeschalt. Nach dem Ausschalen wurde die abgezogene Fläche, d.h. die Fläche, die nicht mit einer Schalung in Kontakt war, mit einer Stahlbürste aufgerauht. Anschließend wurden die so erhaltenen Betonkörper 7 Tage unter Wasser und danach 21 Tage bei 20°C und 65% relativer Luftfeuchtigkeit gelagert.

**Tabelle 1: Rezepturen der Betonzusammensetzungen:**

| | | Referenzbeton | VG1 | VG2 | B1 | B2 | B3 |
|---|---|---|---|---|---|---|---|
| Zement^{a)} | [kg/m³] | 370 | 370 | 370 | 370 | 370 | 370 |
| Kies B16^{b)} | [kg/m³] | 1727 | 1678 | 1629 | 1678 | 1629 | 1629 |
| Wasser | [kg/m³] | 185 | 166,5 | 148 | 166,5 | 148 | 148 |
| Additiv D1 | [kg/m³] | - | 37 | 74 | - | - | - |
| Additiv D2 | [kg/m³] | - | - | - | 37 | 74 | - |
| Additiv D3 | [kg/m³] | - | - | - | - | - | 37 |
| Fließmittel^{c)} | [Gew.-%]^{c)} | 0,75 | 0,15 | - | 0,27 | - | 0,19 |
| w/z^{d)} | | 0,50 | 0,50 | 0,50 | 0,50 | 0,50 | 0,50 |
| LP-Gehalt^{e)} | [%] | 2,1 | 2,0 | 2,3 | 2,7 | 2,3 | 2,3 |
| Rohdichte | [kg/dm³] | 2,4300 | 2,395 | 2,362 | 2,392 | 2,338 | 2,390 |
| Ausbreitmaß | [mm] | 440 | 395 | 445 | 395 | 445 | 400 |

| | | | | | | | |
|---|---|---|---|---|---|---|---|
| a) CEM II / A-S 42,5 R (Portlandhüttenzement); b) Kies mit Sieblinie B16 (0-16 mm); c) SIKA Addiment FM F (Melaminsulfonat); Angabe in Gew.-% bezieht sich auf Zement; d) w/z: Wasser-Zement-Wert; e) Luftporengehalt. | | | | | | | |

### Bestimmung des Natriumchlorid-Aufnahmekoeffizienten:

Es wurden vier Seiten des jeweiligen Betonkörpers so mit Epoxidharz beschichtet und abgedichtet, dass zwei gegenüberliegende Seiten unbeschichtet blieben. Dann wurde der jeweilige Betonkörper gewogen und auf einem Abstandhalter mit einer nichtbeschichteten, abgezogenen Fläche 2 cm tief in eine 3 %-ige wässrige Natriumchlorid-Lösung eingetaucht. Nach 24 h bei 20°C wurde der jeweilige Betonkörper aus der Natriumchlorid-Lösung entnommen, mit einem Tuch abgetrocknet und gewogen. Der Betonkörper wurde anschließend für 24 h bei 70°C gelagert. Dieser Zyklus, beginnend mit dem Eintauchen in die Natriumchlorid-Lösung, wurde insgesamt fünfmal durchgeführt.
An Hand der so behandelten Betonkörper wurde der Natriumchlorid-Aufnahmekoeffizient in Anlehnung an DIN 52617 ermittelt.

**Tabelle 2: Natriumchlorid-Aufnahmekoeffizienten:**

| | Referenzbeton | VG1 | VG2 | B1 | B2 | B3 |
|---|---|---|---|---|---|---|
| Aufnahmekoeffizient [kg/ (m² h^{0,5})] | 0,525 | 0,198 | 0,160 | 0,098 | 0,054 | 0,092 |

In den erfindungsgemäßen Betonkörpern war die Menge an aufgenommenem Natriumchlorid um erheblich mehr als den Faktor 5 gegenüber dem Referenzbeton reduziert (Beispiele B1, B2, B3 und Referenzbeton). Im Vergleich zum Vergleichsbeispiel VG1 war der Widerstand des erfindungsgemäßen Betonkörper B1 gegen das Eindringen von Natriumchlorid doppelt so hoch.

### Bestimmung des löslichen Chloridgehaltes in den Betonkörpern:

Hierzu wurden die oben beschriebenen, mit wässriger Natriumchlorid-Lösung behandelten Betonkörper eingesetzt. Aus dem jeweiligen Betonkörper wurden dann in unterschiedlichen Bohrtiefen Bohrmehlproben entnommen (siehe Tabelle 3). Die Angaben in cm in Tabelle 3 bezeichnen die Bohrtiefe jeweils gemessen ausgehend von der Fläche, die bei der Behandlung der Probekörper mit einer wässrigen Natriumchlorid-Lösung vollständig in die Natriumchlorid-Lösung getaucht war.

Aus den so erhaltenen Bohrproben wurde der Chloridgehalt quantitativ bestimmt (nach W. Breit, Concrete Technology Reports 1998 - 2000, Verlag Bau + Technik, (Thielen, G. (Ed.)), Seiten 145-167).

**Tabelle 3: Löslicher Chloridgehalt in den Betonkörpern:**

| | lösliches Chlorid in Gew.-%, bezogen auf Zement | | |
|---|---|---|---|
| Bohrtiefe | Referenzbeton | VG1 | B1 |
| 0 bis 1 cm | 0,2366% | 0,1780% | 0,1105% |
| 1 bis 2 cm | 0,1124% | 0,0226% | 0,0062% |
| 2 bis 3 cm | 0,0350% | 0,0092% | 0,0043% |
| 0 bis 3 cm | 0,3840% | 0,2098% | 0,1210% |

Im Vergleich zum Referenzbeton drang in den erfindungsgemäßen Betonkörper B1 weniger Chlorid ein und das Chlorid drang zudem weniger tief ein. Das Chlorid verblieb nahezu ausschließlich in der äußersten 1 cm dicken Schicht von B1. Auch gegenüber dem Vergleichsbeispiel VG1 nahm der erfindungsgemäße Betonkörper B1 insgesamt weniger Chlorid auf, und die Eindringtiefe von Chlorid in den Betonkörper B1 war entscheidend reduziert. Dagegen drang im Vergleichsbeispiel VG1 in erheblichem Umfang Chlorid in tiefere Schichten ein.
Dies bedeutet, dass bei der erfindungsgemäßen Vorgehensweise die Betondeckung reduziert werden kann, was sich wirtschaftlich vorteilhaft auswirkt. Durch den gemeinsamen Einsatz von Polymerisaten und Silanen in Betonmischungen wird also das rasche, umfängliche und tiefe Eindringen schädlicher Salze verhindert. Betonzusammensetzungen, die entweder Polymerisate oder Silane enthalten, ergeben dagegen keine Betonkörper mit hinreichender Dauerhaftigkeit.

### Bestimmung der Carbonatisierung von Betonkörpern:

### Herstellung von Betonkörpern:

Zur Herstellung der Betonkörper wurden die in Tabelle 4 angegebenen Komponenten in den dort angegebenen Mengen eingesetzt. Die Herstellung der Betonzusammensetzungen erfolgte analog zu der Vorgehensweise, wie sie oben unter der Überschrift "Bestimmung des Eindringens von Frost-Tau-Salz in Betonkörper" beschrieben wurde. Die Betonzusammensetzungen wurde je in Schalungen (Maße: 4x4x16 cm³) eingebracht und auf dem Rütteltisch während 1, min verdichtet.
Entsprechend den Vorgaben der Expositionsklasse XC4 (DIN 1045-2) wurde für alle Betonzusammensetzungen als Wasser-Zement-Wert (w/z) 0,6 gewählt. Die Konsistenz der Betonzusammensetzungen wurde mit dem Fließmittel über das Ausbreitmaß "weich" eingestellt (Konsistenzklasse F 3).
Das Ausbreitmaß (bestimmt nach DIN EN 12350-5), der Luftporengehalt (bestimmt nach DIN EN 12350-7) und die Rohdichte der Betonzusammensetzungen (bestimmt nach DIN EN 12350-6) sind in Tabelle 4 abgebildet.

**Tabelle 4: Rezepturen der Betonzusammensetzungen:**

| | | Referenzbeton | VG3 | VG4 | VG5 | B4 |
|---|---|---|---|---|---|---|
| Zement^{a)} | [kg/m³] | 370 | 370 | 370 | 370 | 370 |
| Kies B8^{b)} | [kg/m³] | 1644 | 1644 | 1644 | 1545 | 1545 |
| Wasser | [kg/m³] | 222 | 222 | 222 | 170,5 | 170,5 |
| Additiv D1 | [kg/m³] | - | - | - | 74 | - |
| Additiv D2 | [kg/m³] | - | - | - | - | 74 |
| Additiv Z1 | [Gew.-%]^{f)} | - | 0,5 | - | - | - |
| Additiv Z2 | [Gew.-%]^{f)} | - | - | 0,5 | - | - |
| Fließmittel^{c)} | [Gew.-%]^{c)} | 0,56 | 0,43 | 0,48 | 0,14 | 0,14 |
| w/z^{d)} | | 0,60 | 0,60 | 0,60 | 0,60 | 0,60 |
| LP-Gehalt^{e)} | [%] | 1,5 | 1,7 | 1,9 | 2,3 | 2,2 |
| Rohdichte | [kg/dm³] | 2,3681 | 2,3534 | 2,3609 | 2,3044 | 2,3044 |

| | | | | | | |
|---|---|---|---|---|---|---|
| a) CEM II / A-S 42,5 R (Portlandhüttenzement); b) Kies mit Sieblinie B8 (0-8 mm); c) SIKA Addiment FM F (Melaminsulfonat); Angabe in Gew.-% bezieht sich auf Zement; d) w/z: Wasser-Zement-Wert; e) Luftporengehalt; f) Angabe bezogen auf Zement. | | | | | | |

Die Carbonatisierung des Betons wurde in Anlehnung an DIN EN 13295 geprüft.
Die mit den Betonzusammensetzungen gefüllten Schalungen wurden mit einer Folie abgedeckt und für 24 h bei 20°C und 65% relativer Luftfeuchtigkeit gelagert und anschließend ausgeschalt. Nach dem Ausschalen wurden die so erhaltenen Betonkörper in Folie gewickelt und für 7 Tage bei 20°C und 65% relativer Luftfeuchtigkeit gelagert. Anschließend wurden die Betonkörper aus der Folie entnommen und für 21 Tage bei 20°C und 65% relativer Luftfeuchtigkeit gelagert.
Zur Austestung der Carbonatisierung wurden die Betonkörper anschließend 6 Monate einer Kohlendioxid-haltigen Atmosphäre ausgesetzt (20°C; 65% relative Feuchtigkeit; Kohlendioxid-Gehalt: 9 Vol.-%). Die Bestimmung der Carbonatisierung erfolgte in Anlehnung an DIN EN 13295 mittels Phenolphthalein-Indikator.

**Tabelle 5: Carbonatisierung der Betonkörper:**

| | Referenzbeton | B4 | VG3 | VG4 | VG5 |
|---|---|---|---|---|---|
| Carbonatisierung | 52% | 22% | 65% | 49% | 31% |

Beim erfindungsgemäßen Betonkörper B4 wurde die Carbonatisierung im Vergleich zum Referenzbeton mehr als halbiert. Der Prüfkörper VG4, der eine Silankomponente, aber keine Polymerisat-Komponente enthielt, ergab nur eine geringfügige Reduktion der Carbonatisierung im Vergleich zum Referenzbeton. Dies zeigt, dass die erfindungsgemäße Kombination von Silanen und Polymerisaten den Widerstand von Festbeton gegen Carbonatisierung überraschenderweise in synergistischer Weise steigern. Fettsäureester, wie beispielsweise in EP-A 1286930, EP-A 717016 oder US 5922124 beschrieben, wirken sich dagegen nachteilig auf den Widerstand des Betons gegen Carbonatisierung aus (Vergleichsbeispiel VG3 und Referenzbeton).

## Patentansprüche

1. Verwendung von Betonzusammensetzungen enthaltend Zement, Füllstoffe, Wasser und gegebenenfalls weitere Additive oder Zusatzmittel zur Herstellung von Festbeton mit einer Schichtdicke von ≥ 3 cm, **dadurch gekennzeichnet, dass** die Betonzusammensetzungen zusätzlich
0,2 bis 40 Gew.-%, bezogen auf den Zementgehalt der Betonzusammensetzung, an einem oder mehreren Polymerisaten auf Basis ethylenisch ungesättigter Monomere und
0,1 bis 15 Gew.-%, bezogen auf das Trockengewicht der Polymerisate, an einem oder mehreren Silanen enthalten,
wobei die Polymerisate in Form von Schutzkolloid stabilisierten wässrigen Dispersionen vorliegen und
die Silane ausgewählt werden aus der Gruppe bestehend aus Tetramethoxysilan, Tetraethoxysilan, Methyltripropoxysilan, Methyltri(ethoxyethoxy)silan, Phenyltriethoxysilan, Isobutyltriethoxysilan, Isooctyltriethoxysilan, Isooctyltrimethoxysilan, n-Octyltriethoxysilan, n-Octyltrimethoxysilan, Hexadecyltriethoxysilan, Hexadecyltrimethoxysilan, Dipropyldiethoxysilan, Methylphenyldiethoxysilan und Diphenyldimethoxysilan.

2. Verwendung von Betonzusammensetzungen nach Anspruch 1, **dadurch gekennzeichnet, dass** die ethylenisch ungesättigten Monomer ausgewählt werden aus der Gruppe umfassend Vinylester, (Meth)-acrylsäureester, Vinylaromaten, Olefine, 1,3-Diene und Vinylhalogenide.

3. Verwendung von Betonzusammensetzungen nach Anspruch 1 bis 2, **dadurch gekennzeichnet, dass** die Polymerisate ausgewählt werden aus der Gruppe umfassend Mischpolymerisate von Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren, von Vinylacetat verschiedenen Vinylestern mit 1 bis 12 C-Atomen im Carbonsäurerest; Mischpolymerisate von Vinylestern, 1 bis 50 Gew.-% Ethylen und 1 bis 60 Gew.-% (Meth)Acrylsäureester von unverzweigten oder verzweigten Alkoholen mit 1 bis 15 C-Atomen; Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten können; Mischpolymerisate mit Vinylestern, 1 bis 50 Gew.-% Ethylen und 1 bis 60 Gew.-% Vinylchlorid; wobei sich die Angaben in Gew.-% auf jeweils 100 Gew.-% aufaddieren.

4. Verwendung von Betonzusammensetzungen nach Anspruch 1 bis 3, **dadurch gekennzeichnet, dass** die Betonzusammensetzungen 1 bis 10 Gew.-% Polymerisate enthalten, bezogen auf den Zementgehalt der Betonzusammensetzung.

5. Verwendung von Betonzusammensetzungen nach Anspruch 1 bis 4, **dadurch gekennzeichnet, dass** die Betonzusammensetzungen 0,5 bis 9 Gew.-% Silane enthalten, bezogen auf das Trockengewicht der Polymerisate.

6. Verwendung von Betonzusammensetzungen nach Anspruch 1 bis 5, **dadurch gekennzeichnet, dass** die Polymerisate in Form von wässrigen Dispersionen in die Betonzusammensetzungen eingebracht werden.

7. Verwendung von Betonzusammensetzungen nach Anspruch 6, **dadurch gekennzeichnet, dass** die Polymerisate in Form von wässrigen Dispersionen kein Antiblockmittel enthalten.

8. Verwendung von Betonzusammensetzungen nach Anspruch 6 oder 7, **dadurch gekennzeichnet, dass** die Silane vor oder während der Polymerisation bei der Herstellung der Polymerisate zugegeben werden oder ganz oder teilweise in Substanz zu den Polymerisaten in Form von wässrigen Dispersionen zugegeben werden.

9. Verwendung von Betonzusammensetzungen nach Anspruch 1 bis 8 zur Herstellung von Beton-Böden, Beton-Wänden, Beton-Infrastrukturbauwerken, Betonfertigteilen, zur Auskleidung von Bauwerken oder zur Hangsicherung.

## Claims

1. Use of concrete compositions comprising cement, fillers, water and optionally further additives or admixtures for producing solid concrete having a layer thickness of ≥ 3 cm, **characterized in that** the concrete compositions further comprise
0.2 to 40 wt%, based on the cement content of the concrete composition, of one or more polymers based on ethylenically unsaturated monomers, and
0.1 to 15 wt%, based on the dry weight of the polymers, of one or more silanes,
the polymers being present in the form of protective colloid stabilized aqueous dispersions, and
the silanes being selected from the group consisting of tetramethoxysilane, tetraethoxysilane, methyltripropoxysilane, methyltri(ethoxy-ethoxy)silane, phenyltriethoxysilane, isobutyl-triethoxysilane, isooctyltriethoxysilane, isooctyltrimethoxysilane, n-octyltriethoxysilane, n-octyltrimethoxysilane, hexadecyltriethoxysilane, hexadecyltrimethoxysilane, dipropyldiethoxysilane, methylphenyldiethoxysilane and diphenyldimethoxysilane.

2. Use of concrete compositions according to Claim 1, **characterized in that** the ethylenically unsaturated monomers are selected from the group encompassing vinyl esters, (meth)acrylic esters, vinylaromatics, olefins, 1,3-dienes and vinyl halides.

3. Use of concrete compositions according to Claims 1 and 2, **characterized in that** the polymers are selected from the group encompassing copolymers of vinyl esters with 1 to 50 wt% of ethylene; copolymers of vinyl acetate with 1 to 50 wt% of ethylene and 1 to 50 wt% of one or more further vinyl esters, different from vinyl acetate, having 1 to 12 C atoms in the carboxylic acid residue; copolymers of vinyl esters, 1 to 50 wt% of ethylene and 1 to 60 wt% of (meth) acrylic esters of unbranched or branched alcohols having 1 to 15 C atoms; copolymers with 30 to 75 wt% of vinyl acetate, 1 to 30 wt% of vinyl laurate or vinyl esters of an alpha-branched carboxylic acid having 9 to 11 C atoms, and also 1 to 30 wt% of (meth)acrylic esters of unbranched or branched alcohols having 1 to 15 C atoms, said copolymers being able additionally to contain 1 to 40 wt% of ethylene; and copolymers with vinyl esters, 1 to 50 wt% of ethylene and 1 to 60 wt% of vinyl chloride; the figures in wt% here add up in each case to 100 wt%.

4. Use of concrete compositions according to Claims 1 to 3, **characterized in that** the concrete compositions comprise 1 to 10 wt% of polymers, based on the cement content of the concrete composition.

5. Use of concrete compositions according to Claims 1 to 4, **characterized in that** the concrete compositions comprise 0.5 to 9 wt% of silanes, based on the dry weight of the polymers.

6. Use of concrete compositions according to Claims 1 to 5, **characterized in that** the polymers are introduced in the form of aqueous dispersions into the concrete compositions.

7. Use of concrete compositions according to Claim 6, **characterized in that** the polymers in the form of aqueous dispersions comprise no anti-blocking agent.

8. Use of concrete compositions according to Claim 6 or 7, **characterized in that** the silanes are added before or during the polymerization, in the preparation of the polymers, or are added wholly or partly in bulk to the polymers in the form of aqueous dispersions.

9. Use of concrete compositions according to Claims 1 to 8 for producing concrete floors, concrete walls, concrete infrastructure constructions and pre-fabricated concrete components, for lining constructions or for stabilizing slopes.

## Revendications

1. Utilisation de compositions de béton contenant du ciment, des charges, de l'eau et le cas échéant d'autres additifs ou adjuvants pour la fabrication de béton durci présentant une épaisseur de couche ≥ 3 cm, **caractérisée en ce que** les compositions de béton contiennent en outre
0,2 à 40% en poids, par rapport à la teneur en ciment de la composition de béton, d'un ou de plusieurs polymères à base de monomères éthyléniquement insaturés et
0,1 à 15% en poids, par rapport au poids sec des polymères, d'un ou de plusieurs silanes,
les polymères se trouvant sous forme de dispersions aqueuses stabilisées par un colloïde de protection et les silanes étant choisis dans le groupe constitué par le tétraméthoxysilane, le tétraéthoxysilane, le méthyltripropoxysilane, le méthyltri(éthoxyéthoxy)silane, le phényltriéthoxysilane, l'isobutyltriéthoxysilane, l'isooctyltriéthoxysilane, l'isooctyltriméthoxysilane, le n-octyltriéthoxysilane, le n-octyltriméthoxysilane, l'hexadécyltriéthoxysilane, l'hexadécyltriméthoxysilane, le dipropyldiéthoxysilane, le méthylphényldiéthoxysilane et diphényldiméthoxysilane.

2. Utilisation de compositions de béton selon la revendication 1, **caractérisée en ce que** les monomères éthyléniquement insaturés sont choisis dans le groupe comprenant les esters de vinyle, les esters de l'acide (méth)acrylique, les aromatiques de vinyle, les oléfines, les 1,3-diènes et les halogénures de vinyle.

3. Utilisation de compositions de béton selon la revendication 1 à 2, **caractérisée en ce que** les polymères sont choisis dans le groupe comprenant les copolymères d'esters de vinyle et de 1 à 50% en poids d'éthylène ; les copolymères d'acétate de vinyle et de 1 à 50% en poids d'éthylène et de 1 à 50% en poids d'un ou de plusieurs autres esters de vinyle, différents de l'acétate de vinyle, comprenant 1 à 12 atomes de carbone dans le radical acide carboxylique ; les copolymères d'esters de vinyle, de 1 à 50% en poids éthylène et de 1 à 60% en poids d'esters de l'acide (méth)acrylique d'alcools non ramifiés ou ramifiés comprenant 1 à 15 atomes de carbone ; les copolymères comprenant 30 à 75% en poids d'acétate de vinyle, 1 à 30% en poids de laurate de vinyle ou d'esters vinyliques d'un acide carboxylique ramifié en position alpha comprenant 9 à 11 atomes de carbone, ainsi que 1 à 30% en poids d'esters de l'acide (méth)acrylique d'alcools non ramifiés ou ramifiés comprenant 1 à 15 atomes de carbone, qui peuvent encore contenir 1 à 40% en poids d'éthylène ; les copolymères d'esters de vinyle, de 1 à 50% en poids d'éthylène et de 1 à 60% en poids de chlorure de vinyle ; la somme des indications en % en poids valant à chaque fois 100% en poids.

4. Utilisation de compositions de béton selon la revendication 1 à 3, **caractérisée en ce que** les compositions de béton contiennent 1 à 10% en poids de polymères, par rapport à la teneur en ciment de la composition de béton.

5. Utilisation de compositions de béton selon la revendication 1 à 4, **caractérisée en ce que** les compositions de béton contiennent 0,5 à 9% en poids de silanes, par rapport au poids sec des polymères.

6. Utilisation de compositions de béton selon la revendication 1 à 5, **caractérisée en ce que** les polymères sont introduits dans les compositions de béton sous forme de dispersions aqueuses.

7. Utilisation de compositions de béton selon la revendication 6, **caractérisée en ce que** les polymères sous forme de dispersions aqueuses ne contiennent pas d'agent antiagglomérant.

8. Utilisation de compositions de béton selon la revendication 6 ou 7, **caractérisée en ce que** les silanes sont ajoutés lors de la préparation des polymères, avant ou pendant la polymérisation, ou sont ajoutés, sous forme de dispersions aqueuses, totalement ou partiellement, en masse, aux polymères.

9. Utilisation de compositions de béton selon la revendication 1 à 8 pour la production de sols en béton, de parois en béton, de constructions infrastructurelles en béton, de pièces finies en béton, pour le revêtement de constructions ou la stabilisation de pentes.
